Europäisches Patentamt

European Patent Office

Office européen des brevets

(19)

(11) Veröffentlichungsnummer: **0 254 362**
**B1**

(12) # EUROPÄISCHE PATENTSCHRIFT

(45) Veröffentlichungstag der Patentschrift:
31.01.90

(51) Int. Cl.⁴: **B01D 53/34**, C01B 17/74

(21) Anmeldenummer: 87201349.5

(22) Anmeldetag: 14.07.87

(54) **Verfahren zur Reinigung von Rauchgasen.**

(30) Priorität: 19.07.86 DE 3624462

(43) Veröffentlichungstag der Anmeldung:
27.01.88 Patentblatt 88/4

(45) Bekanntmachung des Hinweises auf die Patenterteilung:
31.01.90 Patentblatt 90/5

(84) Benannte Vertragsstaaten:
AT BE DE FR GB IT

(56) Entgegenhaltungen:
EP-A- 0 150 282
EP-A- 0 170 100
FR-A- 2 151 785

(73) Patentinhaber: METALLGESELLSCHAFT AG,
Reuterweg 14 Postfach 3724, D-6000 Frankfurt/M.1(DE)
Patentinhaber: STADTWERKE MÜNSTER GMBH,
Albersloher Weg 27-31, D-4400 Münster(DE)

(72) Erfinder: Dörr, Karl Heinz, Am Gonsenhelmer Spiess 6,
D-6500 Mainz(DE)
Erfinder: Grimm, Hugo, Sudetenstrasse 37,
D-8760 Miltenberg(DE)
Erfinder: Neumann, Heinz, Neugasse 91,
D-6086 Riedstadt 4(DE)
Erfinder: Fennemann, Wolfgang, Schlinkenweg 16,
D-6367 Karben 6(DE)
Erfinder: Ohlms, Norbert, Dr., Drechslerweg 48,
D-4400 Münster(DE)

(74) Vertreter: Rieger, Harald, Dr., Reuterweg 14,
D-6000 Frankfurt a.M.(DE)

**Beschreibung**

Die Erfindung betrifft ein Verfahren zur Reinigung von Rauchgasen oder anderen verunreinigten feuchten Abgasen, die $SO_3$ enthalten.

Rauchgase aus Feuerungsanlagen enthalten an Schadstoffen insbesondere $SO_2$, $NO_x$, HCl und HF. So ergeben sich bei der Verfeuerung von Steinkohle mit einem Schwefelgehalt von I Gew.-% in Großfeuerungsanlagen bei einem Sauerstoffgehalt von 6 Vol.-% im Rauchgas, z.B. $SO_2$-Gehalte zwischen I900 und 2000 mg/Nm³, HCl-Gehalte unterhalb I50 mg/Nm³ und HF-Gehalte unterhalb 50 mg/Nm³. Die $NO_x$-Gehalte liegen - je nach Feuerungsart und verwendeter Kohle - unter 600 mg $NO_2$/Nm³ bis über 2000 mg $NO_2$/Nm³.

Zur Verringerung der Emission dieser Schadstoffe ist es bekannt, das Rauchgas einer katalytischen Nachbehandlung zu unterwerfen. Dabei wird das $SO_2$ zu $SO_3$ oxidiert und das $NO_x$ mit $NH_3$ zu $N_2$ reduziert. Anschließend wird das feuchte Gas unter den Schwefelsäure-Taupunkt abgekühlt und das $SO_3$ in Form von Schwefelsäure auskondensiert.

Ein solches Verfahren ist aus der DE-A 33 3I 545 bekannt. Das feuchte, $SO_3$-haltige Gas wird zunächst in einer ersten Stufe eines Luftvorwärmers bis auf eine Temperatur oberhalb des Schwefelsäuretaupunktes und dann in einer zweiten Stufe unter den Schwefelsäuretaupunkt abgekühlt.

Die zweite Stufe des Luftvorwärmers besteht aus säurefestem Werkstoff, beispielsweise aus Glasrohren. Die Abkühlung in der zweiten Stufe kann nur bis zu einer Temperatur erfolgen, die die nach der Großfeuerungsanlagenverordnung vorgeschriebene Mindesttemperatur an der Schornsteinmündung und den erforderlichen Auftrieb des Abgases im Kamin noch gewährleistet. Dadurch ist eine Feinreinigung des Gases bei niedrigen Temperaturen nicht möglich.

Der Erfindung liegt die Aufgabe zugrunde, den $SO_3$-Gehalt durch Kondensation in Form von Schwefelsäure mit möglichst hoher Konzentration weitestgehend zu entfernen sowie zusätzlich evtl. vorhandene andere gasförmigen Schadstoffe wie HCl, HF, und $SO_2$ zu entfernen und die für den Kamin erforderliche Gastemperatur in technisch einfacher und wirtschaftlicher Weise zu erzielen.

Die Lösung dieser Aufgabe erfolgt erfindungsgemäß dadurch, daß

a) das Rauchgas in einem Wärmeaustauscher durch indirekten Wärmeaustausch auf eine Temperatur unterhalb des Schwefelsäure-Taupunktes abgekühlt wird,

b) das abgekühlte Gas in einem $SO_3$-Kondensator durch Eindüsen von verdünnter Schwefelsäure im Gegenstrom auf eine vorbestimmte Temperatur weiter abgekühlt wird, und eine verdünnte Schwefelsäure mit vorbestimmter Konzentration auskondensiert wird,

c) das aus dem $SO_3$-Kondensator austretende Gas in einem Feinwäscher durch Eindüsen einer wäßrigen Flüssigkeit gewaschen und auf 40 bis 55°C abgekühlt wird,

d) das aus dem Feinwäscher austretende Gas in einem Aufheizer durch Eindüsen von verdünnter Schwefelsäure aus dem $SO_3$-Kondensator auf eine vorbestimmte Temperatur aufgeheizt wird,

e) das Gas nach der $SO_3$-Kondensation durch ein Filter geleitet wird,

f) verdünnte Schwefelsäure aus dem Aufheizer in den $SO_3$-Kondensator eingedüst wird,

g) die Temperatur des Gases in (d) so gewählt wird, daß das in (c) aufgenommene Wasser nicht auskondensiert wird und im austretenden Gas verbleibt,

h) die Austrittstemperatur des Gases aus (a) etwa so eingestellt wird, daß die Temperatur der in (b) anfallenden verdünnten Schwefelsäure etwa der Temperatur des Gases in (d) entspricht und

i) die Menge der in (d) eingedüsten verdünnten Schwefelsäure so eingestellt wird, daß die aus (d) abgeleitete verdünnte Schwefelsäure eine Temperatur aufweist, die etwa der in (b) erforderlichen Austrittstemperatur des Gases entspricht.

Der Wärmeaustauscher ist korrosionsfest ausgebildet, z.B. als Röhrenwärmeaustauscher mit Glasrohren, Kunststoffrohren, kunststoffbeschichten oder emaillierten Rohren oder Graphitrohren. Als Kühlmedium wird vorzugsweise Luft verwendet. Die vorgewärmte Luft kann nach weiterer Aufheizung in einem nachgeschalteten normalen Wärmeaustauscher als Verbrennungsluft eingesetzt werden. Das im Wärmeaustauscher anfallende Schwefelsäure-Kondensat kann in den nachfolgenden $SO_3$-Kondensator fließen oder als Produktion abgezogen werden, wobei die Konzentration etwas höher ist. Der $SO_3$-Kondensator kann als Leerturm, als Turm mit einer Füllkörperschicht oder als Turm mit einem oder mehreren Düsenböden, die mit der verdünnten Schwefelsäure besprüht werden, ausgebildet sein. Die Schwefelsäure kann eingedüst oder gesprüht werden. Vor dem Austritt kann ein Tropfenabscheider angeordnet sein. Die verdünnte Schwefelsäure wird in einen Sumpf am Boden abgeschieden. Zwischen Wärmeaustauscher und $SO_3$-Kondensator kann ein vertikaler oder horizontaler Venturi geschaltet werden, in dem eine zusäzliche Behandlung des Gases durch Eindüsen von verdünnter Schwefelsäure erfolgt. Der Feinwäscher kann wie der Kondensator ausgebildet sein, er kann aber auch als Venturi ausgebildet sein, in dem die Feinwäsche im Gleichstrom erfolgt. Der Feinwäscher kann auf den $SO_3$-Kondensator aufgesetzt werden oder separat angeordnet sein. In beiden Fällen besteht keine Verbindung zwischen den Flüssigkeitskreisläufen. Als wäßrige Flüssigkeit kann Wasser oder sehr dünne Schwefelsäure bis zu etwa 20 % verwendet werden oder jede andere Flüssigkeit, die HCl und HF auswäscht. Die wäßrige Flüssigkeit wird zweckmäßigerweise im Kreislauf geführt, wobei die vom Gas aufgenommene Wassermenge ersetzt wird. Die in der Feinwaschstufe aufgenommenen Schadstoffe werden kontinuierlich aus einem abgeleiteten Teilstrom oder diskontinuierlich entfernt, z.B. durch Neutralisation. Der Aufheizer kann wie der $SO_3$-Kondensator

ausgebildet sein. Er wird vorzugsweise im Gegenstrom betrieben. Das Filter kann im Aufheizer, Feinwäscher oder SO₃-Kondensator angeordnet werden. Das Filter kann als Kerzenfilter, Wiremeshfilter, lamellenförmig oder als Filterschüttung ausgebildet sein. Die Sümpfe des SO₃-Kondensators und Aufheizers können zum Ausgleich der Säuremengen miteinander verbunden werden. Die Temperatur, auf die das Gas im SO₃-Kondensator abgekühlt wird, ist abhängig vom Partialdruck der Gemischkomponenten H₂O/H₂SO₄. Die Konzentration der auskondensierten verdünnten Schwefelsäure wird vorwiegend im Bereich von 60 bis 75 % gewählt. Aus dieser Vorgabe und der in der Feinreinigung erforderlichen Temperatur und der dort erfolgenden Wasserdampfaufnahme ergeben sich alle anderen erforderlichen Temperaturen und erforderlichen Säuremengen.

Eine vorzugsweise Ausgestaltung besteht darin, daß die Konzentration der verdünnten Schwefelsäure 60 - 80 Gew.-%, vorzugsweise 60 - 75 Gew.-% beträgt. Bei diesen Konzentrationen wird die gewünschte Austrittstemperatur des Gases aus dem Aufheizer in besonders günstiger und wirtschaftlicher Weise erzielt.

Eine vorzugsweise Ausgestaltung besteht darin, daß die in den Feinwäscher eingedüste wäßrige Flüssigkeit H₂O₂ oder H₂S₂O₈ enthält. Dadurch wird auch restliches SO₂ zu SO₃ oxidiert und absorbiert. Außerdem können Schwankungen bei der katalytischen Umsetzung von SO₂ zu SO₃ bzw. ein Ausfall des Katalysators aufgefangen werden. Auch der NO$_x$-Gehalt wird gesenkt.

Eine vorzugsweise Ausgestaltung besteht darin, daß die im Feinwäscher eingedüste wäßrige Flüssigkeit im Kreislauf geführt und durch indirekten Wärmeaustausch gekühlt wird. Dadurch wird eine starke Aufkonzentrierung der Schadstoffe in der Waschflüssigkeit erreicht und die Weiterverarbeitung erleichtert. Außerdem wird evtl. zugesetztes H₂O₂ oder H₂S₂O₈ besser ausgenutzt.

Eine vorzugsweise Ausgestaltung besteht darin, daß die Temperatur des aus dem Aufheizer austretenden Gases durch Zumischung von heißen Gasen erhöht wird. Durch Zumischung eines kleinen Teilstromes von z.B. Heißluft können Temperaturschwankungen sehr gut aufgefangen werden. Außerdem kann eine solche Zumischung erforderlich werden, wenn aus Werkstoffgründen die Konzentration der Schwefelsäure so niedriggehalten werden muß, daß die erforderliche Abgastemperatur nicht voll erreicht wird.

Eine vorzugsweise Ausgestaltung besteht darin, daß die Temperatur der aus dem SO₃-Kondensator in den Aufheizer geleiteten verdünnten Schwefelsäure durch indirekten Wärmeaustausch erhöht wird. Mit dieser Maßnahme lassen sich ebenfalls die oben geschilderten Probleme lösen. Die Aufheizung erfolgt durch Fremdwärme, wie z.B. Dampf.

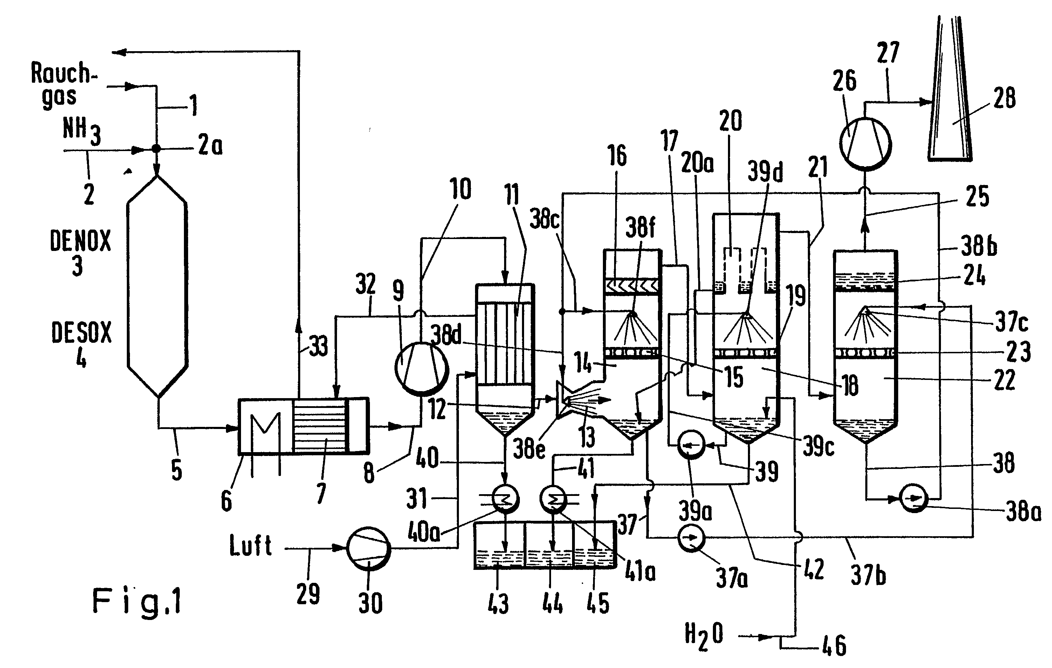

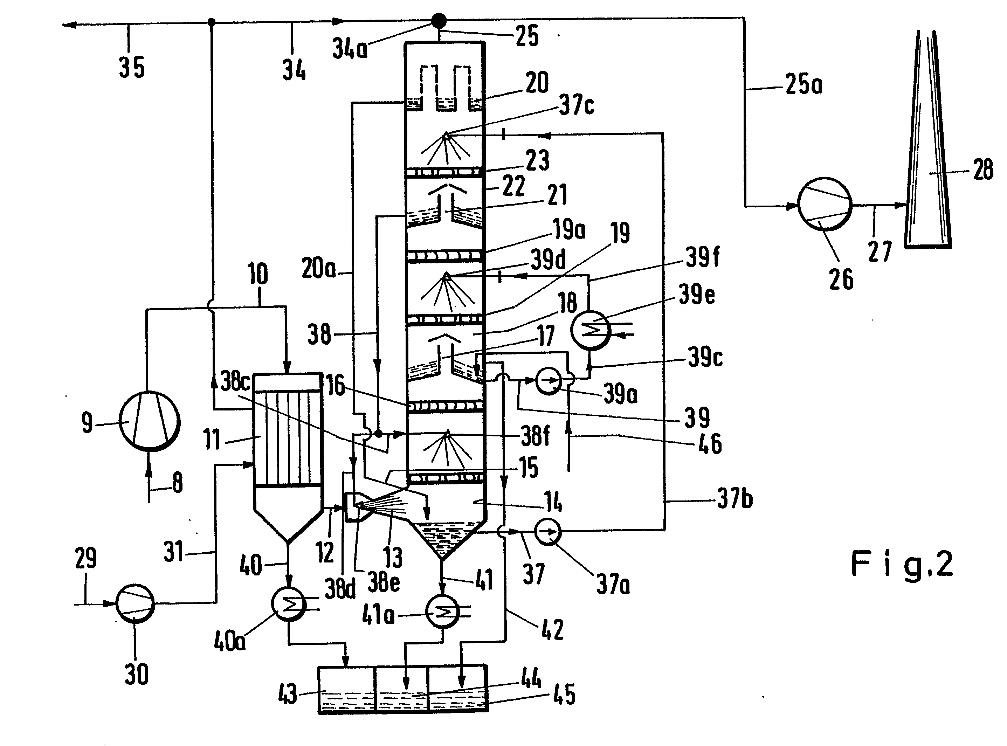

Die Erfindung wird anhand der Figuren I und 2 näher und beispielsweise erläutert. Figur I zeigt eine Ausgestaltung, bei der die einzelnen Aggregate separat angeordnet sind, während sie in Figur 2 übereinander angeordnet sind.

Beispiel I (Figur I)

Über Leitung I werden I20 000 Nm³/h entstaubte Rauchgase aus einer Kohle-Feuerungsanlage mit folgenden Gehalten pro Nm³: ca. 2000 mg SO₂, ca. 800 mg NO$_x$, ca. 50 mg SO₃, ca. I50 mg HCl, ca. 30 mg HF, ca. 50g H₂O, mit einer Temperatur von ca. 450°C in den DENOX-DESOX-Katalyseturm 3,4 eingeleitet. Über Leitung 2 wird NH₃ in der Mischvorrichtung 2a dem Rauchgas zugemischt. In dem DENOX-Katalysator 3 wird das NO$_x$ mit NH₃ zu N₂ reduziert und in dem DESOX-Katalysator 4 das SO₂ zu SO₃ oxidiert.

Über Leitung 5 gelangt das weitgehend katalysierte Rauchgas mit einer Temperatur von ca. 450°C in einen Speisewasservorwärmer 6, wird dort auf ca. 400°C abgekühlt und anschließend im LUVO 7 auf ca. 230 - 250°C weiter abgekühlt.

Über Leitung 8, Gebläse 9, Leitung I0 tritt das Gas in den Kondensations-LUVO II ein, wo bei Abkühlung der Gase auf ca. I57°C, ca. 30% des im Rauchgas enthaltenen SO₃ kondensiert wird. Über Leitung I2 gelangt das Gas in den Kondensations-Turm I4, der aus einem Gleichstrom-Venturi I3 mit Bedüsungsvorrichtung 38e und einem Gegenstromapparat 14 mit Bedüsungsboden I5, Bedüsungsvorrichtung 38f und Sprühabscheider I6 besteht, wo ca. 70% des noch im Rauchgas enthaltenen SO₃ bei ca. 92°C kondensiert wird. Über Leitung I7 gelangt das weitgehend vom SO₃ befreite Rauchgas mit einer Temperatur von ca. 92°C in den Feinwäscher I8 mit Verteilerboden I9, Bedüsungsvorrichtung 39d, Filterkerzen 20, wo bei einer Temperatur von ca. 40°C das im Gas enthaltene HCl, HF und Spuren von SO₂ und SO₃ mittels Sauerwasser oder Schwefelsäure mit ca. 5 - 20 Gew.-% weitgehend ausgewaschen werden. Im Kerzenfilter 20 erfolgt die Abscheidung der H₂SO₄-Nebel. Die Abkühlung der Gase im Wäscher I8 von ca. 92°C auf ca. 40°C erfolgt durch Wasser-Verdampfung. Ca. 2,4 m³/h H₂O werden über Leitung 46 in den Feinwäscher I8 zugegeben und verdampft.

Über Leitung 2I gelangt das Gas mit einer Temperatur von ca. 40°C in den Aufheizturm 22 mit Verteilerboden 23 und Bedüsungsvorrichtung 37c, wo das Gas auf ca. I05°C vorgewärmt wird. Über Leitung 25, Gebläse 26, Leitung 27, Kamin 28 gelangt das gereinigte Rauchgas in die Atmosphäre. Das Abgas enthält pro Nm³: I30 - I50 mg SO₂, 30 - 40 mg SO₃, 50 - 60 mg HCl, 50 - 60 mg NO$_x$ (gerechnet als NO), Spuren von HF, ca. 78g H₂O.

Über Leitung 29, Ventilator 30, Leitung 3I werden ca. I20.000 Nm³/h Verbrennungsluft mit einer Temperatur von ca. 40°C in den Kondensations LUVO II geleitet, dort auf ca. I20 - I30°C vorgewärmt, über Leitung 32 in den LUVO 7 geleitet und dort auf 280 - 290°C weiter vorgewärmt. Über Leitung 33 gelangt die Verbrennungsluft zur Kohleverbrennung.

Aus dem Sumpf des Kondensationsturmes I3/14 werden ca. 255 m³/h Schwefelsäure mit einer Konzentration von ca. 70 Gew.-% H₂SO₄ und einer Temperatur von ca. I05°C über Leitung 37, Säurepumpe 37a, Leitung 37b in die Bedüsungsvorrichtung 37c in den Aufheizturm 22 gefördert. Die Säure kühlt sich im Turm 22 auf ca. 92°C ab und wird wieder über Leitung 38, Säurepumpe 38a, Leitungen 38b, 38c, 38d in die Bedüsungsvorrichtungen 38e und 38f gefördert, wo sich die Säure wieder auf ca. l05°C vorwärmt.

Aus dem Sumpf des Feinwäschers l8 werden ca. l50m³/h Sauerwasser bzw. Dünnsäure mit einer Temperatur von ca. 40°C über Leitung 39, Pumpe 39a, Leitung 39c in die Bedüsungsvorrichtung 39d gefördert. Über Leitung 20a wird das im Kerzenfilter 20 anfallende Kondensat in den Sumpf des Kondensationsturms l4 geleitet. Die im Kondensations-LUVO ll anfallende Säure-Produktion (ca. 2,2 m³/Tag) wird mit einer Konzentration von ca. 75 Gew.-% $H_2SO_4$ und einer Temperatur von ca. l50°C über Leitung 40 in den Säure-Kühler 40a geleitet, dort auf ca. 40°C abgekühlt und gelangt dann in den Stapelbehälter 43. Die im Kondensationsturm l3/l4 anfallende Säure-Produktion (ca. 5,l m³/Tag) wird mit einer Konzentration von ca. 70 Gew.-% $H_2SO_4$ über Leitung 4l in den Säurekühler 4la geleitet, dort auf ca. 40°C abgekühlt und gelangt dann in den Stapelbehälter 44. Das im Feinwäscher l8 anfallende HCl/HF- beladene Sauerwasser wird über Leitung 42 in den Stapelbehälter 45 geleitet.

Beispiel 2 (Figur 2)

Das Rauchgas hat die im Beispiel l beschriebene Zusammensetzung.

l20000 Nm³/h Rauchgas werden wie in Beispiel l (Figur l) beschrieben in einem vorgeschalteten LUVO 7 auf 230 - 250°C abgekühlt.

Über Leitung 8, Gebläse 9, Leitung l0 tritt das Gas in den Kondensations-LUVO ll ein, wo bei einer Abkühlung der Gase auf ca. l20°C ca. 40% des im Rauchgas enthaltenen $SO_3$ kondensiert werden. Über Leitung l2 gelangt das Gas in den Kondensations-Turm l4, der aus einem Gleichstrom-Venturi l3 mit Bedüsungsvorrichtung 38e und einem Gegenstromapparat l4 mit Bedüsungsvorrichtung 38f und Sprühabscheider l6 besteht, wo ca. 60% des im Rauchgas enthaltenen $SO_3$ bei ca. 75°C kondensiert wird.

Über die innenliegende Leitung l7 gelangt das weitgehend vom $SO_3$ befreite Rauchgas mit einer Temperatur von ca. 75°C in den Feinwäscher l8 mit Verteilerboden l9, Bedüsungsvorrichtung 39d, wo bei einer Temperatur von ca. 40°C das im Gas enthaltene HCl und HF und ein Teil der restlichen $SO_2$ mittels $H_2O_2$ beladener ca. 20%iger Schwefelsäure ausgewaschen wird. $H_2O_2$ oder $H_2S_2O_8$ wird über Leitung 46 in den Feinwäscher l8 zugegeben. Die Kühlung der Säure zwecks Abführung der Gaswärme von ca. 75°C auf ca. 40°C erfolgt im Säurekühler 39e. Über die innenliegende Gasleitung 2l gelangt das Gas mit ca. 40°C in den Aufheizturm 22 mit Verteilerboden 23 und Bedüsungsvorrichtung 37c, wo das Gas auf ca. 80°C vorgewärmt wird. Im Kerzenfilter 20 erfolgt die Abscheidung der $H_2SO_4$-Nebel.

Über Leitung 25 verlässt das Gas die Anlage. In der Mischkammer 34a werden ca. 5000 Nm³/h Warmluft mit einer Temperatur von ca. l50°C über Leitung 34 dem Rauchgas zugemischt wodurch die Temperatur von ca. 80°C auf ca. 83°C erhöht wird. Über Leitung 25a, Gebläse 26, Leitung 27, Kamin 28 gelangt das gereinigte Rauchgas in die Atmosphäre.

Das Abgas enthält pro Nm³: 30 - 40 mg $SO_2$, 20 - 30 mg $SO_3$, 50 - 60 mg HCL, 50 - 60 mg $NO_x$ (gerechnet als NO), Spuren von HF, ca. 55 g $H_2O$.

Über Leitung 29, Ventilator 30, Leitung 3l werden ca. l25 000 Nm³/h Luft mit einer Temperatur von ca. 30°C in den Kondensations-LUVO ll geleitet und auf ca. l40 - l50°C vorgewärmt. Über Leitung 35 werden ca. l20 000 Nm³/h Verbrennungsluft zur Kohleverbrennung und über Leitung 34 ca. 5 000 Nm³/h vorgewärmte Luft zur Mischkammer 34a geleitet. Aus dem Sumpf des Kondensationsturmes l3/l4 werden ca. 400 m³/h Schwefelsäure mit einer Konzentration von ca. 62 Gew.-% $H_2SO_4$ und einer Temperatur von ca. 80°C über Leitung 37, Säurepumpe 37a, Leitung 37b in die Bedüsungsvorrichtung 37c in den Aufheizturm 22 gefördert. Die Säure kühlt sich im Turm 22 auf ca. 75°C ab und wird über die Leitungen 38, 38d und 38c in die Bedüsungsvorrichtungen 38e und 38f geleitet, wo die Säure wieder auf ca. 80°C vorgewärmt wird.

Aus dem Sumpf des Feinwäschers l8 werden ca. 400 m³/h Dünnsäure mit einer Temperatur von ca. 45°C über Leitung 39, Pumpe 39a, Leitung 39c, Kühler 39e, Leitung 39f in die Bedüsungsvorrichtung 39d gefördert. Über Leitung 20a wird das im Kerzenfilter 20 anfallende Kondensat in den Sumpf des Kondensationsturmes l4 geleitet.

Die im Kondensations-LUVO ll anfallende Säureproduktion (ca. 3,3 m³/Tag) wird mit einer Konzentration von ca. 70 Gew.-% $H_2SO_4$ und einer Temperatur von ca. l20°C über Leitung 40 in den Säurekühler 40a geleitet und dort auf ca. 40°C abgekühlt und gelangt dann in den Stapelbehälter 43.

Die im Kondensationsturm l3/l4 anfallende Säure-Produktion (ca. 5 m³/Tag) wird mit einer Konzentration von ca. 62 Gew.-% $H_2SO_4$ über Leitung 4l in den Säurekühler 4la geleitet und dort auf ca. 40°C abgekühlt und gelangt dann in den Stapelbehälter 44.
Die im Feinwäscher l8 anfallende HCl/HF beladene ca. 20%ige Schwefelsäure wird über Leitung 42 in den Stapelbehälter 45 geleitet.

Die Vorteile der Erfindung bestehen darin, daß neben dem $SO_3$-Gehalt auch andere Schadstoffe, wie HCl und HF, weitestgehend aus Rauchgasen oder anderen Gasen mit geringem Gehalt an $SO_3$ entfernt werden können, wobei eine Schwefelsäure mit relativ hoher Konzentration erzeugt wird und trotzdem im gereinigten Abgas die für den Kamin erforderliche Temperatur in technisch einfacher und wirtschaftlicher Weise erzielt wird.

**Patentansprüche**

l. Verfahren zur Reinigung von Rauchgasen oder anderen verunreinigten feuchten Abgasen, die $SO_3$ enthalten, dadurch gekennzeichnet, daß
a) das Rauchgas in einem Wärmeaustauscher durch indirekten Wärmeaustausch auf eine Temperatur unterhalb des Schwefelsäure-Taupunktes abgekühlt wird,
b) das abgekühlte Gas in einem $SO_3$-Kondensator

durch Eindüsen von verdünnter Schwefelsäure im Gegenstrom auf eine vorbestimmte Temperatur weiter abgekühlt wird, und eine verdünnte Schwefelsäure mit vorbestimmter Konzentration auskondensiert wird,

c) das aus dem $SO_3$-Kondensator austretende Gas in einem Feinwäscher durch Eindüsen einer wäßrigen Flüssigkeit gewaschen und auf 40 bis 55°C abgekühlt wird,

d) das aus dem Feinwäscher austretende Gas in einem Aufheizer durch Eindüsen von verdünnter Schwefelsäure aus dem $SO_3$-Kondensator auf eine vorbestimmte Temperatur aufgeheizt wird,

e) das Gas nach der $SO_3$-Kondensation durch ein Filter geleitet wird,

f) verdünnte Schwefelsäure aus dem Aufheizer in den $SO_3$-Kondensator eingedüst wird,

g) die Temperatur des Gases in (d) so gewählt wird, daß das in (c) aufgenommene Wasser nicht auskondensiert wird und im austretenden Gas verbleibt,

h) die Austrittstemperatur des Gases aus (a) etwa so eingestellt wird, daß die Temperatur der in (b) anfallenden verdünnten Schwefelsäure etwa der Temperatur des Gases in (d) entspricht und

i) die Menge der in (d) eingedüsten verdünnten Schwefelsäure so eingestellt wird, daß die aus (d) abgeleitete verdünnte Schwefelsäure eine Temperatur aufweist, die etwa der in (b) erforderlichen Austrittstemperatur des Gases entspricht.

2. Verfahren nach Anspruch I, dadurch gekennzeichnet, daß die Konzentration der verdünnten Schwefelsäure 60 - 80 Gew.-%, vorzugsweise 60 - 75 Gew.-% beträgt.

3. Verfahren nach Anspruch I oder 2, dadurch gekennzeichnet, daß die in den Feinwäscher eingedüste wäßrige Flüssigkeit $H_2O_2$ oder $H_2S_2O_8$ enthält.

4. Verfahren nach einem der Ansprüche I bis 3, dadurch gekennzeichnet, daß die im Feinwäscher eingedüste wäßrige Flüssigkeit im Kreislauf geführt und durch indirekten Wärmeaustausch gekühlt wird.

5. Verfahren nach einem der Ansprüche I bis 4, dadurch gekennzeichnet, daß die Temperatur des aus dem Aufheizer austretenden Gases durch Zumischung von heißen Gasen erhöht wird.

6. Verfahren nach einem der Ansprüche I bis 5, dadurch gekennzeichnet, daß die Temperatur der aus dem $SO_3$-Kondensator in den Aufheizer geleiteten verdünnten Schwefelsäure durch indirekten Wärmeaustausch erhöht wird.

## Claims

1. Process for purifying flue gases or other contaminated moist waste gases which contain $SO_3$, characterised in that
a) the flue gas is cooled to a temperature below the sulphuric acid dew point by indirect heat exchange in a heat exchanger,
b) the cooled gas is further cooled to predetermined temperature in a $SO_3$-condenser by spraying in dilute sulphuric acid in counter-current, and a dilute sulphuric acid of a predetermined concentration is condensed out,
c) the gas leaving the $SO_3$ condenser is washed in a fine washer by spraying in an aqueous liquid and is cooled to 40–55°C,
d) the gas leaving the fine washer is heated to a predetermined temperature in a reheater by spraying in dilute sulphuric acid from the $SO_3$ condenser,
e) after the $SO_3$ condensation the gas is led through a filter,
f) dilute sulphuric acid from the reheater is sprayed in the $SO_3$ condenser,
g) the temperature of the gas in (d) is so chosen that the water taken up in (c) does not condense out and remains in the gas leaving,
h) the exit temperature of the gas from (a) is approximately so chosen that the temperature of the dilute sulphuric acid obtained in (b) corresponds approximately to the temperature of the gas in d), and
i) the amount of the dilute sulphuric acid sprayed in (d) is so chosen that the dilute sulphuric acid withdrawn from (d) has a temperature which corresponds approximately to the required exit temperature of the gas in (b).

2. Process according to Claim 1 characterised in that the concentration of the dilute sulphuric acid is 60–80 weight per cent, preferably 60–75 weight per cent.

3. Process according to Claim 1 or 2 characterised in that the aqueous liquid sprayed into the fine washer contains $H_2O_2$ or $H_2S_2O_8$.

4. Process according to one of Claims 1 to 3 characterised in that the aqueous liquid sprayed into the fine washer is recirculated and is cooled by indirect heat exchange.

5. Process according to one of Claims 1 to 4 characterised in that the temperature of the gas leaving the reheater is raised by mixing with hot gases.

6. Process according to one of Claims 1 to 5 characterised in that the temperature of the dilute sulphuric acid led out of the $SO_3$ condenser into the reheater is raised by indirect heat exchange.

## Revendications

1. Procédé d'épuration de gaz de fumée ou d'autres effluents gazeux humides ou pollués, qui contiennent du $SO_3$, caractérisé en ce qu'il consiste:
a) à refroidir le gaz de fumée dans un échangeur de chaleur par échange de chaleur indirecte, à une température inférieure au point de rosée de l'acide sulfurique,
b) à refroidir encore, à une température déterminée à l'avance, le gaz refroidi dans un condenseur de $SO_3$, par introduction d'acide sulfurique dilué à contre-courant et à séparer par condensation un acide sulfurique dilué ayant une concentration déterminée à l'avance,
c) à laver du condenseur de $SO_3$ le gaz sortant dans un laveur fin par introduction d'un liquide aqueux, et à le refroidir jusqu'à 40 à 55°C,
d) à porter le gaz sortant du laveur fin dans un dispositif de chauffage à une température déterminée à l'avance, en introduisant de l'acide sulfurique dilué provenant du condenseur de $SO_3$,

e) à envoyer le gaz dans un filtre, après: la condensation du $SO_3$,

f) à envoyer de l'acide sulfurique dilué du dispositif de chauffage au condenseur de $SO_3$,

g) a choisir la température du gaz dans (d) de façon que l'eau absorbée dans (c) ne se sépare pas par condensation et reste dans le gaz sortant,

h) à régler la température de sortie du gaz de (a) de façon que la température de l'acide sulfurique dilué se formant dans (b) corresponde sensiblement à la température du gaz dans (d), et

i) à régler la quantité de l'acide sulfurique dilué intro duit en (d) de façon que l'acide sulfurique dilué prélevé en (d) ait une température qui corresponde à peu près à la température de sortie du gaz qui est nécessaire dans (b).

2. Procédé suivant la revendication 1, caractérisé en ce que la concentration de l'acide sulfurique dilué est de 60 à 80 % en poids et, de préférence, de 60 à 75 % en poids.

3. Procédé suivant la revendication 1 OU 2, caractérisé en ce que le liquide aqueux introduit dans le laveur fin contient $H_2O_2$ ou $H_2S_2O_8$.

4. Procédé suivant l'une des revendications 1 à 3, caractérisé en ce qu'il consiste à faire circuler le liquide aqueux introduit dans le laveur fin en circuit fermé, et à le refroidir par échange de chaleur indirecte.

5. Procédé suivant l'une des revendications 1 à 4, caractérisé en ce qu'il consiste à élever la température du gaz sortant du dispositif de chauffage par addition de gaz chauds.

6. Procédé suivant l'une des revendications 1 à 5, caractérisé en ce qu'il consiste à élever la température de l'acide sulfurique: dilué envoyé du condenseur de $SO_3$ au dispositif de chauffage, par échange de chaleur indirecte.

Fig.1

EP 0 254 362 B1

Fig.2